# EUROPEAN PATENT APPLICATION

(11) **EP 4 563 611 A1**
(43) Date of publication of application: **04.06.2025**
(21) Application number: 23213350.4
(22) Date of filing: 30.11.2023
(51) Int. Cl.: C08G 18/10, C08G 18/28, C08G 18/48, C08G 18/75, C09J 175/08

(54) **ONE-COMPONENT MOISTURE CURABLE SILANE-TERMINATED POLYMER COMPOSITION WITH REACTIVE PLASTICIZER**

(71) Applicant: Sika Technology AG, 6340 Baar (CH)
(72) Inventor: HAYASHI, Yuki, Hiratsuka, 254-0021 (JP); GAGABE, Gene Frederick, Hiratsuka, 254-0021 (JP)
(74) Representative: Sika Patent Attorneys

(57) **Abstract**

The invention relates to a one-component moisture-curable composition, comprising at least one organic polymer containing on average at least two reactive silane end groups, at least one reactive plasticizer containing on average 1 to 1.5 reactive silane end groups, optionally a filler and optionally at least one additive.

The one-component moisture curable composition can be formulated to show excellent properties for application in non-bleed sealants. The invention also reduces the amount of hazardous phthalate-containing plasticizers.

## Description

### Technical Field

The invention relates to one-component moisture curable compositions based on silane-terminated polymers with reactive plasticizers and their use as sealants and adhesives.

### Prior Art

One-component moisture curable compositions based on polymers containing reactive silane groups are known and are used in large quantities as elastic sealants in construction. Polymers containing reactive silane groups are in particular organic polymers containing reactive silane groups, which are also referred to as "silane-functional polymers", "silane-modified polymers" (SMP) or "silane-terminated polymers" (STP). Compositions containing these polymers harden via crosslinking reactions of the reactive silane groups on the polymers, which hydrolyze under the influence of moisture, condense with one another as silanol groups and thus form a covalently bonded network and, macroscopically, a cured material.

The cured material is generally suitable to be used as a sealant. Such sealants contain different components depending on the field of use and on the requirements imposed on them, at application and after curing.

Plasticizers are one of the commonly used additives in adhesives and sealants formulations. They improve the performance by creating much-needed flexibility, optimizing viscosity and also improving mechanical performance.

Most plasticizers used in sealants are phthalates, based on esters of phthalic acid. Phthalate-containing plasticizers are considered to be a health hazard and, on the basis of official regulations, are being scrutinized and might be banned in the future from increasing numbers of products.

Sealants for exterior construction applications are often overpainted by various types of paints. The migration of free components in the sealant, such as plasticizers, can lead to paint defects, so-called bleeding. Bleeding causes the paint surface to become discolored, gummy, or even tacky. Over time, the surface can also attract dirt which becomes imbibed in the top layer. Thus, the appearance of the paint surface and its performance as finishing layer is negatively impacted.

To reduce the amount of migratable and in some cases health-threatening conventional plasticizer such as phthalates, a need exists to find alternative plasticizers for application in non-bleed sealants. Reactive plasticizers are a solution to this problem. There is a limited number of reactive plasticizers known in the state of the art, for example EP1710280B1*,* which discloses monofunctional polyether polymers having an alkoxysilane group, prepared via the hydrosilylation of monools or by the functionalization of monools with isocyanatosilanes.

Another method for obtaining silane-functional reactive plasticizers based on polyether monools is disclosed in US6998459B2*.* In this disclosure, the reactive plasticizers are based on high molecular weight monools having average molecular weights of between 3'000 and 12'000 g/mol. However, while such known reactive plasticizers improve the bleeding properties of the sealants, they commonly reduce the mechanical properties such as tear propagation resistance or tensile strength, and they adversely affect the application properties, for example by increasing the cut-off string length formed when the sealants are applied by a handgun.

Thus, it remains desirable to obtain a sealant based on silane-functional polymers that has excellent non-bleeding and overpaintability properties, but at the same time shows improved mechanical properties and user-friendly application properties.

### Summary of the Invention

It is therefore an object of the present invention to provide reactive plasticizers for one-component moisture curable compositions based on silane-terminated polymers used as sealants, which manage to reduce the amount of conventional plasticizers, in particular phthalate-based plasticizers, improve the mechanical and application properties of the sealant and exhibits good adhesion with paints and shows less delamination.

The intention in particular was to use reactive plasticizers based on monofunctional alkoxy silane-terminated polymer.

Thus, this type of reactive plasticizer can keep the sealant's viscosity low before curing and will still provide the desired flexibility after curing, because only one end of the reactive plasticizer can react with the silane-terminated polymers.

The present invention achieves these aforementioned objectives with the features of independent claim 1.

Surprisingly, it was also found that the viscosities of the reactive plasticizers do not show a linear correlation to the molecular weight of the polymer backbones. There exists an optimum molecular weight of the polymer backbone that gives the lowest viscosity. When the molecular weight of the polymer backbone is small, the viscosity is high. As the molecular weight increases, the viscosity drops, however, when the molecular weight increases more, the viscosity increases again.

The invention also relates to use of the one-component STP sealant according to the invention as a construction sealant, more particularly as exterior facing sealant. Furthermore, the invention relates to the use of the one-component STP sealant according to the invention as an industrial sealant or adhesive.

Furthermore, the invention also relates to a building or a part of building, where the one-component STP sealant according to the invention was used as a construction sealant and was painted over, preferably with water-based or solvent-based paint.

Further aspects of the invention are the subject of further independent claims. Particularly preferred embodiments of the invention are the subject of the dependent claims.

### Ways of executing the invention

The present invention relates in a first aspect to a one-component moisture curable composition comprising
a) at least one organic polymer **P** having 2 or more terminal hydrolyzable groups selected from dialkoxysilane or trialkoxysilane;
b) at least one reactive plasticizer **RP** having on average 1 to 1.5 terminal hydrolyzable groups selected from dialkoxysilane or trialkoxysilane
   wherein the reactive plasticizer **RP** is a polymer product obtained by reacting successively;
   i) a monohydroxy-functional poly(alkylene oxide) monool **MO** having an average molecular weight Mₙ of less than 3'000 g/molwith a diisocyanate I to form a urethane linkage and an isocyanate terminal group;
   ii) endcapping the polymer of step i) with a secondary amine endcapper **EC** obtained from the reaction of a primary aminosilane **AS** with a Michael acceptor **M;**
c) optionally fillers **F,** preferably selected from chalk, especially from precipitated calcium carbonates and/or ground calcium carbonates;
d) optionally additives **A,** preferably selected from hindered amine light stabilizers, UV absorbers, antioxidants, pigments, drying agents, adhesion promoters, curing catalysts, plasticizers, mineral oils, and/or thixotropic agents.

Substance names beginning with "poly", such as polyol or polyisocyanate, refer here to substances which formally contain per molecule two or more of the functional groups appearing in their name.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

The term "radical" is used in this document in a formal sense, meaning a molecular rest bound to an atom by a covalent bond, while the bond is formally "cut" to describe the molecular rest attached to it.

Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

In the present document, the term "reactive silane group" refers to a silyl group that is bonded to an organic radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or, preferably end groups. Silane-functional polymers are also referred to as silane-terminated polymers (STP). γ-silane-functional polymers are polymers in which the Si atom of the silane group is linked to the polymer via a 1,3-propylene bridge.

The term "monofunctional" refers to substances which formally contain on average per molecule 1-1.5 of a specified functional group.

The sealants comprising the silane-functional polymer are moisture-curing, meaning that in the presence of water or moisture, more particularly atmospheric moisture the above-described hydrolysis and condensation reactions on the silane groups take place, causing crosslinking of the polymer molecules and curing of the sealant. The curing is also referred to as crosslinking.

The "Michael reaction" or "Michael addition" in organic chemistry refers to a 1,4 addition reaction between a Michael donor and a Michael acceptor to produce a Michael adduct by creating a carbon-carbon bond at the acceptors β-carbon atom.

"Aminosilanes", "isocyanatosilanes", and "mercaptosilanes" are organosilanes whose organic radical has at least one amino group, at least one isocyanate group, and at least one mercapto group, respectively. "Primary aminosilanes" are aminosilanes which have a primary amino group, i.e., an NH₂ group which is bonded to an organic radical. "Secondary aminosilanes" are aminosilanes which have a secondary amino group, i.e., an NH group which is bonded to two organic radicals.

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1 ,2-propylene oxide onto starter molecules having two active hydrogen atoms.

The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".

"Room temperature" refers here to a temperature of 23°C.

"Molecular weight" of oligomers or polymers is understood as the average molecular weight of their chain length distribution. "Average molecular weight" is understood herein to mean the number-average Mₙ of an oligomeric or polymeric mixture of molecules or radicals, which is typically determined by means of gel permeation chromatography (GPC) against polystyrene as standard.

"Weight percent" or "percentage by weight", and its abbreviation "wt.-%" refer to the weight percentage of a certain compound in a total composition, if not otherwise defined. The terms "weight" and "mass" are used interchangeably in this document and refer to the mass as a property of a physical body and commonly measured in kilograms (kg).

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted line in the formulae in this document in each case represents the bond between a substituent and the corresponding molecular radical.

The term "does not contain polydiorganosiloxanes" means that no such compounds have been added during formulation of the composition. If traces of such species are unknowingly and/or unavoidably present, for example stemming from the synthesis of the silane-functional polymer or due to condensation reactions of silane-functional diorganosilane compounds possibly present in the composition, these are not considered as polydiorganosiloxanes in the meaning of this term. In simpler words, the term "does not contain polydiorganosiloxanes" means that no silicone oils or reactive silicone polymers, in particular polydimethylsiloxanes, were added during formulation of the composition.

"Overpaintability" describes the degree of ability of a material to withstand staining of the paint surface and delamination between material and paint after application of paint to the material's surface.

All industrial standards and norms cited in this document refer to the respective edition in force on the time of filing of the first application of this invention, if not otherwise defined.

The one-component moisture curable composition comprises at least one organic polymer **P** which has hydrolyzable silane-functional end groups of the formula (IV) 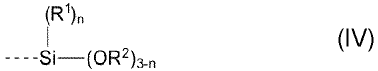
Wherein radical R¹ represents a linear or branched monovalent hydrocarbon radical having 1 to 4 carbon atoms and which optionally contains one or more C-C multiple bonds, and/or cycloaliphatic, and/or aromatic moieties;
Radical R² represents a linear or branched monovalent hydrocarbon radical having 1 to 5 carbon atoms and which optionally contains one or more C-C multiple bonds, and/or cycloaliphatic, and/or aromatic moieties;
n is 1 or 0.

Preferably, R¹ is a methyl radical.

In the same or other preferred embodiments, R² is a methyl or an ethyl radical. Preferably, if R² is an ethyl radical, n is 0.

The organic polymer **P** contains on average at least 2 of the terminal hydrolyzable silane-functional groups according to formula (IV) per molecule. Thus, **P** is not monofunctional.

In a preferred embodiment the hydrolyzable silane-functional end groups of the organic polymer **P** are selected from trimethoxy silane, methlydimethoxy silane or triethoxy silane.

In a preferred embodiment the organic polymer **P** is a γ-silane-terminated polymer, meaning that there are three -CH₂- groups between the Si atom and the end of the polymer chain, in particular a nitrogen or oxygen atom.

Examples of suitable backbones for the silane-functional organic polymers **P** are polyurethanes, including polyether-polyurethanes and polyester-polyurethanes, polyureas, including polyether-polyureas and polyester-polyureas, polyisocyanurates, polycarbodiimides, poly(meth)acrylates, and polyethers, such as polyoxyalkylenes. A particularly preferred backbone for the organic polymer **P** can be chosen from the list consisting of polyoxyethylene, polyoxypropylene or polyoxy-propylenepolyoxyethylene, polyurethane, poly(meth)acrylate or polybutadiene.

In one preferred embodiment the organic polymer **P** is a silane-functional polyurethane polymer which is obtainable by the reaction of a silane having at least one group that is reactive toward isocyanate groups with a polyurethane polymer which contains isocyanate groups. This reaction is carried out preferably in a stochiometric ratio of the groups that are reactive toward isocyanate groups to the isocyanate groups of 1:1, or with a slight excess of groups that are reactive toward isocyanate groups, and so the resulting silane-functional polyurethane polymer is entirely free from isocyanate groups. In a preferred embodiment silane is a γ-silane-terminated structure.

In the reaction of the silane containing at least one group that is reactive toward isocyanate groups with a polyurethane polymer which contains isocyanate groups, the silane may in principle, albeit not preferably, be used in substochiometric quantities, to give a silane-functional polymer which contains both silane groups and isocyanate groups.

The silane which contains at least one group that is reactive toward isocyanate groups is, for example, a mercaptosilane or an aminosilane, more particularly an aminosilane.

Examples of suitable polyurethane polymer containing isocyanate groups for producing a silane-functional polyurethane organic polymer **P** are polymers obtainable by the reaction of at least one polyol with at least one polyisocyanate, more particularly a diisocyanate. This reaction may be accomplished by bringing the polyol and the polyisocyanate to reaction with customary methods, as for example from temperatures of 50°C to 100°C, optionally with accompanying use of suitable catalysts, the polyisocyanate being metered such that these isocyanate groups are in a stochiometric excess in relation to the hydroxyl groups of the polyol.

The excess of polyisocyanate is selected in particular such that the amount of free isocyanate groups present in the resulting polyurethane polymer after the reaction of all of the hydroxyl groups of the polyol is from 0.1 to 5 wt.-%, preferably 0.1 to 2.5 wt.-%, more preferably 0.2 to 1 wt.-%, based on the overall polymer.

Preferred polyurethane polymers are those having the stated amount of free isocyanate groups and obtained from the reaction of diisocyanates with high molecular mass diols in an NCO:OH ratio of 1.5:1 to 2.2:1.

Suitable polyols for preparing the polyurethane polymer are, in particular, polyether polyols, polyester polyols, and polycarbonate polyols, and also mixtures of these polyols. Particularly suitable are polyoxyethylene polyols and polyoxypropylene polyols, more particularly polyoxyethylene diols, polyoxypropylene diols, polyoxyethylene triols, and polyoxypropylene triols.

Especially suitable are polyoxyalkylene diols or polyoxyalkylene triols having a degree of unsaturation of less than 0.02 meq/g and having an average molecular weight in the range from 1'000 to 30'000 g/mol, and also polyoxyethylene diols, polyoxyethylene triols, polyoxypropylene diols, and polyoxypropylene triols having an average molecular weight of 400 to 20'000 g/mol. Likewise particularly suitable are so-called ethylene oxide-terminated ("EO-endcapped", ethylene oxide-endcapped) polyoxypropylene polyols.

These stated polyols preferably have an average molecular weight of 250 to 30'000 g/mol, more particularly of 1'000 to 30'000 g/mol, and an average OH functionality in the range from 1.6 to 3.

The proportion of the organic polymer **P** in the composition may vary within wide ranges. Preferably the organic polymer **P** is present in the composition in a proportion for example of 5 to 60 wt.-%, preferably of 10 to 40 wt.-%, more preferably of 10 to 20 wt.-%.

The one-component moisture curable composition comprises at least one reactive plasticizer **RP** which has hydrolyzable silane-functional end groups of the formula (IV) as described above. Compared to the organic polymer **P,** the reactive plasticizer **RP** contains on average 1 to 1.5 of the terminal hydrolyzable silane-functional groups according to formula (IV) per molecule. Thus, **RP** is monofunctional.

The reactive plasticizer **RP** is obtainable by the reaction of at least one monool **MO** with at least one polyisocyanate, more particularly a diisocyanate. The monool **MO** is a monohydroxy-functional polyether, that has on average one hydroxy functional group at one terminal of the polymer.

Examples of suitable monools **MO** for the production of reactive plasticizer **RP** are polyethers, such as polyoxyalkylenes. Suitable are in particular monohydroxy-functional polyoxyethylenes, polyoxypropylenes or polyoxy-propylenepolyoxyethylenes. Especially suitable are monohydroxy-functional polyoxypropylenes having an average molecular weight of less than 3'000 g/mol.

In a preferred embodiment the monool **MO** has a molecular weight (an average molecular weight Mₙ) of between 300 and 2'500 g/mol, preferably between 500 and 2'000 g/mol.

In one preferred embodiment reactive plasticizer **RP** is a mono-silane-functional polymer which is obtainable by the reaction of a silane having at least one group that is reactive toward isocyanate groups with a diisocyanate-endcapped polyether-monool polymer which contains on average one isocyanate group. This reaction is carried out preferably in a stochiometric ratio of the groups that are reactive toward isocyanate groups to the isocyanate groups of 1:1, or with a slight excess of groups that are reactive toward isocyanate groups, and so the resulting mono-silane-functional polymer is entirely free from isocyanate groups. In a preferred embodiment silane is a γ-silane-terminated structure.

In the reaction of the silane containing at least one group that is reactive toward isocyanate groups with a polymer which contains one isocyanate group, the silane may in principle, albeit not preferably, be used in substochiometric quantities, to give a silane-functional polymer which contains both silane groups and isocyanate groups.

The silane which contains at least one group that is reactive toward isocyanate groups is, for example, a mercaptosilane or an aminosilane, more particularly an aminosilane.

The reaction conditions for obtaining the reactive plasticizer **RP** are identical or at least similar to the parameters used in obtaining the organic polymer **P** and known to the skilled person in the field.

Polyisocyanates which can be used for preparing the polyurethane polymer are commercial polyisocyanates, especially diisocyanates **I.**

Suitable diisocyanates **I** are aliphatic, cycloaliphatic or aromatic isocyanates, for example 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (= isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene, 2,4- and 2,6-tolylene diisocyanate (TDI), 4,4'-, 2,4'-, and 2,2'-diphenylmethane diisocyanate (MDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatobiphenyl (TODI), oligomers and polymers of the aforesaid isocyanates, and also any desired mixtures of the aforesaid isocyanates.

Particularly preferred diisocyanates are MDI, TDI and IPDI, especially preferred IPDI.

The endcapper **EC** is the Michael-like adduct of the reaction between the aminosilane **AS** with the Michael acceptor **M** and is preferably of the formula (III) 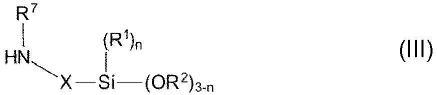
wherein radical R¹ represents a linear or branched monovalent hydrocarbon radical having 1 to 4 carbon atoms and which optionally contains one or more C-C multiple bonds, and/or cycloaliphatic, and/or aromatic moieties;
radical R² represents a linear or branched monovalent hydrocarbon radical having 1 to 5 carbon atoms and which optionally contains one or more C-C multiple bonds, and/or cycloaliphatic, and/or aromatic moieties;
X represents a linear or branched monovalent hydrocarbon radical having 1 to 6 carbon atoms and which optionally contains one or more heteroatoms and optionally one or more C-C multiple bonds, and/or cycloaliphatic, and/or aromatic moieties;
radical R⁷ represents a linear or branched monovalent hydrocarbon radical having 1 to 20 carbon atoms and which optionally contains one or more heteroatoms and/or C-C-multiple bonds, and/or cycloaliphatic, and/or aromatic moieties;
n is 1 or 0.

The aminosilane **AS** is a compound preferably of the formula (I) 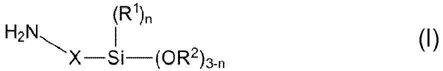
wherein radical R¹ represents a linear or branched monovalent hydrocarbon radical having 1 to 4 carbon atoms and which optionally contains one or more C-C multiple bonds, and/or cycloaliphatic, and/or aromatic moieties;
radical R² represents a linear or branched monovalent hydrocarbon radical having 1 to 5 carbon atoms and which optionally contains one or more C-C multiple bonds, and/or cycloaliphatic, and/or aromatic moieties;
X represents a linear or branched monovalent hydrocarbon radical having 1 to 6 carbon atoms and which optionally contains one or more heteroatoms and optionally one or more C-C multiple bonds, and/or cycloaliphatic, and/or aromatic moieties;
n is 1 or 0.

Examples of suitable aminosilanes **AS** are primary aminosilanes such as 3-aminopropyltrimethoxysilane, 3-aminopropyldimethoxymethylsilane and also analogs of the stated aminosilanes having ethoxy or isopropoxy groups instead of the methoxy groups on the silicon, preferably having ethoxy groups. Particularly suitable aminosilanes **AS** are 3-aminopropyltrimethoxysilane and 2-(aminoethyl)-3-aminopropylmethyldimethoxy silane.

Michael acceptors **M** are compounds which contain double bonds activated by electron acceptor radicals and which are therefore able to enter with primary amino groups (NH₂ groups) into nucleophilic addition reactions in a manner analogous to Michael addition (hetero-Michael addition). The Michael acceptor **M** is a compound preferably of the formula (IIa) or (Ilb) 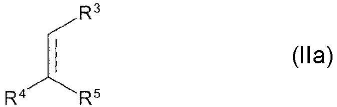 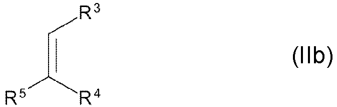
Wherein radical R³ represents a hydrogen radical or a radical selected from the group -COOR⁶, -CN or -NO₂;
radical R⁴ represents a hydrogen radical or a radical selected from the group - R⁶, -COOR⁶, -CN or -NO₂;
radical R⁵ represents a radical selected from the group -R⁶, -COOR⁶, -CN or -NO₂;
Radical R⁶ represents a linear or branched monovalent hydrocarbon radical having 1 to 20 carbon atoms.

Examples of suitable Michael acceptors **M** are compounds such as acrylonitrile, (meth)acrylic esters, (meth)acrylamides, maleic diesters and fumaric diesters, citraconic diesters and itaconic diesters. Preferably, the Michael acceptor **M** is diethyl maleate.

Preferably, the composition according to the precent invention comprises, based on the total composition, between 1 and 40 wt.-%, preferably between 5 and 30 wt.-%, most preferably between 15 and 25 wt.-% of reactive plasticizer **RP.**

The one-component moisture curable composition may optionally comprise at least one filler **F,** this being generally preferred. The filler **F** influences not only the rheological properties of the uncured composition but also the mechanical properties and the surface quality of the cured composition.

Examples of suitable fillers **F** are inorganic and organic fillers, examples being natural, ground or precipitated calcium carbonates, with or without a coating of fatty acids, especially stearic acid, barium sulfate (BaSO₄, also called barite or heavy spar), calcined kaolins, aluminum oxides, aluminum hydroxides, silicas, especially finely divided silicas from pyrolysis operations, carbon blacks, especially industrial carbon black, PVC powders or hollow beads. Preferred fillers are calcium carbonates, calcined kaolins, carbon black, finely divided silicas, and also flame-retardant fillers, such as hydroxides or hydrates, more particularly hydroxides or hydrates of aluminum, preferably aluminum hydroxide. It is entirely possible and may even be an advantage to use a mixture of different fillers. The filler **F** is preferably selected from precipitated calcium carbonates (PCC) and/or ground calcium carbonates (GCC).

Preferably, the composition according to the present invention comprises, based on the total composition, between 0 and 60 wt.-%, preferably between 10 and 50 wt.-%, most preferably between 20 and 40 wt.-% of precipitated calcium carbonate (PCC).

Preferably, the composition according to the present invention comprises, based on the total composition, between 0 and 40 wt.-%, preferably between 10 and 30 wt.-%, most preferably between 15 and 25 wt.-% of ground calcium carbonate (GCC).

The total amount of fillers **F** in the one-component moisture curable composition, where used, may vary within wide ranges, but is for example 10 to 80 wt.-%, preferably 20 to 70 wt.-%, more preferably 30 to 70 wt.-%, more preferably 35 to 65 wt.-%, based on the overall composition.

Furthermore, the one-component moisture curable composition may optionally comprise at least one additive **A.** Such additives **A** are, for example, curing catalysts, thixotropic agents; conventional plasticizers; solvents; fibers; dyes; pigments; mineral oils, adhesion promoters; drying agents; stabilizers to counter heat, light and UV radiation; flame retardants; surface-active substances such as wetting agents; flow control agents; deaerating agents or defoamers; biocides such as algicides, fungicides or fungal growth inhibitors; and also other substances customarily used in moisture-curing compositions.

Use may be made of the curing catalysts known for this purpose to the person skilled in the art. The catalyst is preferably a metal catalyst and/or basic nitrogen-containing and/or phosphorous-containing compound.

Suitable metal catalysts are especially compounds of tin, titanium, zirconium, aluminum or zinc, for example, organotitanates, organozirconates, and organoaluminates, such as diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, and also titanium(IV) or zirconium(IV) or aluminum(III) or zinc(II) complexes, especially. The organotitanates, organozirconates, and organoaluminates preferably contain ligands selected from an alkoxy group, sulfonate group, carboxylate group, dialkyl phosphate group, dialkyl pyrophosphate group, and acetylacetonate group, it being possible for all the ligands to be identical or different from one another. An especially suitable metal-organic curing catalyst is dibutyltin dilaurate (DBTDL).

Suitable basic nitrogen or phosphorus compounds are especially imidazoles, pyridines, phosphazene bases or preferably amines, hexahydrotriazines, biguanides, guanidines or further amidines.

Preferably, the composition according to the present invention comprises, based on the total composition, between 0 and 10 wt.-%, preferably between 1 and 6 wt.-%, most preferably between 1 and 3 wt.-% of curing catalyst, especially a tin catalyst.

Examples for thixotropic agents are urea compounds, polyamide waxes, bentonites or fumed silicas; organically modified castor oil and amide waxes or combinations thereof; or fatty acid amide based substances. The organically modified castor oil may be, for example, a hydrogenated castor oil or another castor oil derivative.

Preferably, the composition according to the present invention comprises, based on the total composition, between 0 and 10 wt.-%, preferably between 1 and 8 wt.-%, most preferably between 1 and 4 wt.-% of thixotropic agent.

The conventional plasticizer may be any of the plasticizers commonly used in compositions based on silane-functional polymers. These include, for example, carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel". Preferably, conventional plasticizers are non-reactive plasticizers.

Examples for adhesion promoters are epoxy silanes (meth)acrylosilanes, anhydridosilanes or adducts of the aforesaid silanes with primary aminosilanes, and also aminosilanes or urea silanes.

Preferably, the composition according to the present invention comprises, based on the total composition, between 0 and 10 wt.-%, preferably between 1 and 6 wt.-%, most preferably between 1 and 3 wt.-% of adhesion promoter.

Examples for drying agents are vinyltrimethoxysilane, γ-functional silanes such as N-(silylmethyl)-O-methyl carbamates, more particularly N-(methyldimethoxysilylmethyl)-O-methyl carbamate, (methacryloxymethyl)-silanes, methoxymethylsilanes, N-phenyl-, N-cyclohexyl-, and N-alkylsilanes, orthoformic esters, calcium oxide or molecular sieves.

Preferably, the composition according to the present invention comprises, based on the total composition, between 0 and 10 wt.-%, preferably between 1 and 8 wt.-%, most preferably between 1 and 4 wt.-% of drying agent.

Examples for stabilizers are hindered amine light stabilizers, UV absorbers and antioxidants.

Preferably, the composition according to the present invention comprises, based on the total composition, between 0 and 10 wt.-%, preferably between 1 and 6 wt.-%, most preferably between 1 and 3 wt.-% of hindered amine light stabilizers.

Preferably, the composition according to the present invention comprises, based on the total composition, between 0 and 10 wt.-%, preferably between 1 and 6 wt.-%, most preferably between 1 and 3 wt.-% of UV absorbers.

Preferably, the composition according to the present invention comprises, based on the total composition, between 0 and 10 wt.-%, preferably between 1 and 6 wt.-%, most preferably between 1 and 3 wt.-% of antioxidants.

Examples for pigments and colorants are especially inorganic or organic pigments, in particular titanium dioxide, iron oxides and chromium oxides.

Preferably, the composition according to the present invention comprises, based on the total composition, between 0 and 15 wt.-%, preferably between 1 and 10 wt.-%, most preferably between 1 and 5 wt.-% of pigments.

Mineral oils are mixtures of higher alkanes from a mineral source, particularly a distillate of petroleum, especially paraffin oils.

Preferably, the composition according to the present invention comprises, based on the total composition, between 0 and 20 wt.-%, preferably between 0 and 10 wt.-%, most preferably between 1 and 10 wt.-% of mineral oil.

The total amount of additives **A** in the one-component moisture curable composition, where used, may vary within wide ranges, but is for example 0 to 40 wt.-%, preferably 10 to 35 wt.-%, most preferably 20 to 35 wt.-% based on the overall composition.

In a preferred embodiment, the one-component moisture curable composition is characterized in that the weight ratio of polymer **P** to reactive plasticizer **RP** is 20:1 to 0.5:1, preferably 10:1 to 1:1, most preferably 5:1 to 1:1.

In a preferred embodiment, the one-component moisture curable composition is characterized in that the composition contains less than 20 wt.-%, preferably less than 10 wt.-%, more preferably less than 5 wt.-% of non-reactive plasticizers, especially phthalate-containing compounds.

The one-component moisture curable composition of the invention is especially suitable as construction sealant, more particularly as exterior facing sealant, more preferably as construction sealant of class 25 LM according to ISO 11600, and/or as sealant according to ASTM C719 class 50.

The one-component moisture curable composition of the invention also relates to a building or a part of a building built with said construction sealant, characterized in that the construction sealant was being painted over, preferably with water-based or solvent-based paint.

The one-component moisture curable composition of the invention is especially suitable as industrial sealant or adhesive, in particular for wing-body truck assembly and/or automobile interior parts.

In one particularly preferred embodiment the one-component moisture curable composition comprises
- 5 - 60 wt.-%, preferably 10 - 40 wt.-%, more preferably 10 - 20 wt.-% of said polymer **P**;
- 1 - 40 wt.-%, preferably 5 - 30 wt.-%, more preferably 15 - 25 wt.-% of said reactive plasticizer **RP**;
- preferably 0 - 20 wt.-%, more preferably 0-10 wt.-%, most preferably 1-10 wt.-% of mineral oil;
- preferably 0 - 60 wt.-%, more preferably 10 - 50 wt.-%, most preferably 20 - 40 wt.-% of precipitated calcium carbonate;
- preferably 0 - 40 wt.-%, more preferably 10 - 30 wt.-%, most preferably 15 - 5 wt.-% of ground calcium carbonate;
- preferably 0 - 10 wt.-%, more preferably 1 - 6 wt.-%, most preferably 1 - 3 wt.-% of hindered amine light stabilizers;
- preferably 0 - 10 wt.-%, more preferably 1 - 6 wt.-%, most preferably 1 - 3 wt.-% of UV absorber;
- preferably 0-10 wt.-%, more preferably 1 - 6 wt.-%, most preferably 1 - 3 wt.-% of adhesion promoter;
- preferably 0 - 2 wt.-% of thixotropic agent;
- preferably 0 - 10 wt.-%, more preferably between 1 - 6 wt.-%, most preferably 1 - 3 wt.-% of antioxidant;
- preferably 0-10 wt.-%, more preferably 1 - 6 wt.-%, most preferably 1 - 3 wt.-% of curing catalyst, in particular tin catalyst;
- preferably 0 -15 wt.-%, more preferably 1 - 10 wt.-%, most preferably 1 - 5 wt.-% of pigment;
- preferably 0-10 wt.-%, more preferably 1 - 8 wt.-%, most preferably 1 - 4 wt.-% of drying agent;
- preferably 0 - 20 wt.-%, more preferably 0-10 wt.-%, most preferably 1 - 5 wt.-% of non-reactive plasticizer.

On application of the sealant of the invention, the silane groups present in the sealant come into contact with moisture. One feature of the silane groups is that they undergo hydrolysis on contact with moisture. In this reaction, organosilanols (Si-OH groups) are formed and, through subsequent condensation reactions, organosiloxanes (Si-O-Si groups). As the outcome of these reactions, which may be accelerated through the use of catalysts or accelerators, the sealant ultimately cures. This process is also referred to as crosslinking.

The composition is preferably produced and stored with exclusion of moisture. Typically, it is storage-stable with exclusion of moisture in a suitable package or arrangement, such as, more particularly, a bottle, a canister, a pouch, a bucket, a vat or a cartridge.

Either the water needed for curing may come from the air (atmospheric moisture), or else the sealant may be brought into contact with a water-containing component, this contact being brought about, for example, by spreading, using a smoothing means, for example, or by spraying, or else the sealant may be admixed with a water-containing component at application, in the form of a water-containing paste, for example.

The sealant of the invention is suitable for example for application to concrete, mortar, brick, tile, plaster, natural stone such as granite or marble, glass, glass-ceramic, metal or metal alloy, wood, plastic, and paint; application to construction materials is especially preferred.

The sealant of the invention is applied preferably in a temperature range from 5 to 45°C and also cures under these conditions.

The invention further relates to the cured sealant which is obtainable from the sealant of the invention after curing thereof with water, more particularly in the form of atmospheric moisture.

The use of the one-component moisture curable composition gives rise to an article which especially has been sealed and painted over. The article is especially a built structure, especially a structure built by structural engineering or civil engineering, preferably a structure with exterior facings.

### Examples

Adduced hereinafter are working examples which are intended to elucidate the invention described in detail. It will be appreciated that the invention is not restricted to these described working examples. The term "standard climatic conditions" refers to a temperature of 23±1°C and a relative air humidity of 50±5%.

### Synthesis of endcappers EC

### Synthesis of endcapper EC-1:

A reaction vessel was charged with 508 g of 3-aminopropyl trimethoxy silane (KBM-903 from Shin-Etsu Silicon). Then, 488 g of diethyl maleate was slowly added with constant stirring at room temperature. The exothermic reaction was probed by using IR spectroscopy to confirm full conversion. The reaction product **EC-1** was collected after cooling down to room temperature overnight.

### Synthesis of endcapper EC-2:

A reaction vessel was charged with 582 g of N-2-(aminoethyl)-3-aminopropyl methyldimethoxy silane (KBM-602 from Shin-Etsu Silicon). Then, 486 g of diethyl maleate was slowly added with constant stirring at room temperature. The reaction was then heated at 60°C overnight. The reaction was probed by using IR spectroscopy to confirm full conversion. The reaction product **EC-2** was collected after cooling down to room temperature.

### Synthesis of Reactive Plasticizers RP

The individual reactive plasticizers **RP** were prepared by reacting various types of monools **MO** with various endcappers **EC** as detailed in table 1. An exemplary synthesis is outlined below.

### Exemplary synthesis of reactive plasticizer RP:

A reaction vessel was charged with 1'000 g of monool **MO** (equals to 1 eq. of OH) and 1 eq. of isophorene diisocyanate (IPDI) (equals to 2 eq. of NCO) with stirring at 70°C. An amount of 0.08 wt.-% Bismuth catalyst (Neodecanoic acid bismuth salt) was added. After saturation of the reaction as probed by titration of the concentration of free isocyanate groups (% NCO), an equimolar (w.r.t. % NCO) amount of endcapper **EC** was added to afford the reactive plasticizer **RP** as a product.

**Table 1: Synthesis details of the reactive plasticizers RP used for the one-component moisture curable composition.**

| **Reactive Plasticizer** | **Monool** | **IPDI** | **% NCO** | **EC-1** | **EC-2** | **Mₙ of Reactive Plasticizer (calc.)** |
|---|---|---|---|---|---|---|
| **RP-1** | LB-65 | 655 g | 7.4 wt.-% | 1'048 g | -- | 692 |
| **RP-2** | LB-285 | 193 g | 3.0 wt.-% | 303 g | - | 1'522 |
| **RP-3** | LB-285 | 193 g | 3.0 wt.-% | - | 331 g | 1'549 |
| **RP-4** | LB-3000 | 75 g | 1.3 wt.-% | 121 g | - | 3'422 |

### Viscosities of Reactive Plasticizers RP

As shown in table 2, the viscosities of the reactive plasticizers **RP** do not show a linear correlation to the molecular weight.

**Table 2: Viscosities of the reactive plasticizers RP.**

| **Reactive Plasticizer** | **Viscosity (mPa·s)** | | |
|---|---|---|---|
| | Initial | After 7d 60°C | After 28d 40°C |
| **RP-1** | 13'020 | 11'190 | 11'740 |
| **RP-2** | 2'400 | 2'390 | 2'050 |
| **RP.3** | 3'140 | 3'860 | 3'740 |
| **RP-4** | 7'290 | 7'420 | 7'630 |

### Synthesis of Organic Polymers P

### Synthesis of organic polymer P-1:

Under moisture exclusion, 3'000 g polyoxypropylene diol (Polyol Acclaim^{®} 12200 from Covestro, molecular weight 10'000 g/mol, OH number 11.2 mg KOH/g), 155 g isophorone diisocyanate (Vestanat^{®} IPDI from Evonik Industries), 414 g diisodecyl phthalate (DIDP) and 0.42 g dibutyltin dilaurate (DBTL) were heated to 90°C with constant stirring and left at this temperature to give a polyurethan prepolymer terminated by isocyanate groups with the titrimetrically determined content of free isocyanate groups of 0.8 wt.-%.

Subsequently, 242 g of endcapper **EC-1** was added to the reaction vessel. The total consumption of the isocyanate groups was checked by IR spectroscopy.

The silane-functional polymer **P-1** was cooled to room temperature and stored under exclusion of moisture.

### Synthesis of organic polymer P-2:

Under moisture exclusion, 3'000 g polyoxypropylene diol (Polyol Acclaim^{®} 12200 from Covestro, molecular weight 10'000 g/mol, OH number 11.2 mg KOH/g), 120 g isophorone diisocyanate (Vestanat^{®} IPDI from Evonik Industries), 454 g diisodecyl phthalate (DIDP) and 0.50 g dibutyltin dilaurate (DBTL) were heated to 90°C with constant stirring and left at this temperature to give a polyurethan prepolymer terminated by isocyanate groups with the titrimetrically determined content of free isocyanate groups of 0.43 wt.-%.

Subsequently, 135 g of endcapper **EC-1** was added to the reaction vessel. The total consumption of the isocyanate groups was checked by IR spectroscopy.

The silane-functional polymer **P-2** was cooled to room temperature and stored under exclusion of moisture.

### Test methods

The **viscosity** measurements on the reactive plasticizers were performed after storage in airtight vial during 1 day at RT (23°C, initial), after 7day at 60°C storage and after 24 days at 40°C storage. The measurements were done on a thermostatic viscometer TV-35 (Toki Sangyo, Japan) at 23°C (rotor 3°XR14, sample 0.4 ml, rotor speed 10 rpm, gap position 0.6).

The **cut-off string** was determined at 23°C and 50% relative humidity. A Teflon test cylinder (diameter 20mm) was penetrated at a depth of 5mm into the sealant sample of thickness 10 mm at a speed of 25cm/4s. After a short time, the test cylinder was removed and a sealant string is generated by the cylinder. The length of this string is defined as cut-off string. Generally, a shorter cut-off string is preferred, due to better applicability.

The **Shore A** hardness was determined according to DIN 53505 on samples with a layer thickness of 6 mm, cured for 7 days at 23°C and on samples cured for 28 days at 23°C.

The **tear propagation resistance** was determined according to DIN 53515, on films with a layer thickness of 2 mm, cured for 7 days at 23°C and then for 7 days at 50°C.

The **tensile strength,** the **elongation at break,** and the **modulus of elasticity** at 0.5-100% elongation were determined according to DIN 53504 (tensile speed: 200 mm/min) on films with a layer thickness of 2 mm, cured for 7 days at 23°C then for 7 days at 50°C.

The **overpaintability** was tested with a piece of cured sealant (20 mm x 50 mm x 10 mm) upon which paint is applied on the sealant surface directly. The sealant was cured at 23°C for 7 days before application of paint. The applied paint was then left to dry for 14 days. Then, the test sample was subjected to aging at 50°C for 14 days before evaluation of the **overpaintability** in terms of **dirt pick-up** and **delamination.**

The **dirt pick-up** was determined according to JIS A003:2011 on test specimens sprinkled with volcanic at 50°C and brushed away after 5 min. The paint surfaces were then observed by eye and categorized as follows:
Good: no staining observable.
Slight: slightly visible dirt stains.
Bad: clearly visible dirt stains.

The **delamination** property was investigated by a cross-cut procedure according to ASTM D3359 (Method A, X-cut and cellophane tape) performed on an overpainted surface of the test specimen above. This was done by cutting an X-shape cut on the surface of the paint. Afterwards the pressure sensitive tape (from Nichiban, peel strength 3.93 N/10mm, tape width 24mm) was pressed with force onto the cut area. Within 5 minutes of applying the tape it was removed by grasping the free end and pulling it off fast at an angle of about 45-60°. The adhesion of the paint to the sealant bead was evaluated as below:
GT0: The edges of the cuts are completely smooth; none of the squares of the lattice is detached.
GT1: Detachment of small flakes of the coating at the intersections of the cuts.
GT2: The coating has flaked along the edges and/or at the intersections of the cuts.
GT3: The coating has flaked along the edges of the cuts partly or wholly in large ribbons, and/or it has flaked partly or wholly on different parts of the squares.
GT4: The coating has flaked along the edges of the cuts in large ribbons and/or some squares have detached partly or wholly.
GT5: Any degree of flaking that cannot even be classified by classification GT4.

### Compounds used in synthesis and compositions

The compounds used in the various synthetic step and in formulating the one-component moisture curable composition are described in table 3.

**Table 3: Compounds used for for the examples.**

| **Name** | **Description** | **Trade name** |
|---|---|---|
| MS polymer | Silyl-terminated polyether | MS Polymer^{™} S227 (Kaneka) |
| Diol | Homopolymer diol | Voranol^{™} 4000LM Polyol (Dow Chemical) |
| monool-1 | Mₙ 340 g/mol, OH value 164.7 mg KOH/g | Newpol LB-65 (Sanyo Kasei) |
| monool-2 | Mₙ 1170 g/mol, OH value 47.9 mg KOH/g | Newpol LB-285 (Sanyo Kasei) |
| monool-3 | Mₙ 3070 g/mol, OH value 18.2 mg KOH/g | Newpol LB-3000 (Sanyo Kasei) |
| Commercial reactive plasticizer (CRP) | Dimethoxymethyl silane diluent | SAT145 (Kaneka) |
| Mineral oil | Paraffin-based oil | Cosmo PureSpin (Cosmo Oil Lubricants) |
| Precipitated calcium carbonate (PCC) | | CCR-B (Hakuenka^{®}) |
| Ground calcium carbonate (GCC) | | NN500 (Nitto Funka) |
| Thixotropic agent | Fatty acid amide based | A-S-A^{®} T-1800 (Itoh Oil Chemicals) |
| Hindered amine light stabilizers (HALS) | 1,2,2,6,6-pentamethyl-4-piperidyl sebacate | JF-95 (Johoku Chemical) |
| UV absorber | 2-(2'-Hydroxy-3'-tert-butyl-5'-methylphenyl)-5-chlorobenzotriazole | JF-79 (Johoku Chemical) |
| Antioxidant | Hindered Phenol | ADK STAB AO-50 (Adeka) |
| Pigment | Titanium dioxide | Diawhite TCR-52 (Sakai Chemical Industry) |
| Drying agent | Vinyltrimethoxysilane | Silquest^{®} A-171 (Momentive) |
| Adhesion promoter | N-2-(aminoethyl)-3-aminopropyldimethoxy silane | KBM-602 (Shin-Etsu) |
| Curing catalyst | Dibutyltin dilaurate (DBTDL) | |
| Conventional plasticizer | Diisodecyl phthalate (DIDP) | |

### Compounds used in overpaintability tests

The paints used for testing the non-bleed delamination properties of the sealant can be found in table 4.

**Table 4: Paints used in overpaintability tests.**

| **Name** | **Type** | **Description** | **Manufacturer** |
|---|---|---|---|
| **NP-1** | Water-based | Under filler elastic excel + Odefresh Si100III | Nippon Paint |
| **NP-2** | Water-based | Water-based cation sealer + Odefresh Si100III | Nippon Paint |
| **NP-3** | Water-based | Water-based cation sealer + DAN Siliconesera R | Nippon Paint |
| **NP-6** | Solvent-based | One-component Hypon fine deguro + Nippei fine urethane U100 | Nippon Paint |
| **NP-7** | Solvent-based | Hypon fine primer II + Nippei fine urethane U100 | Nippon Paint |
| **SKP-1** | Water-based | Water based softsafu SG + Water based serami silicone | SK Kaken |
| **SKP-2** | Water-based | Water based elastic safuepo + Water based elastic serami silicone | SK Kaken |
| **SKP-3** | Water-based | SK elastic premium filler + Water based serami silicone | SK Kaken |
| **SKP-4** | Water-based | Water based hybrid safu + Water based serami silicone | SK Kaken |
| **SKP-5** | Water-based | Water based miracle sealer eco + Water based serami silicone | SK Kaken |
| **SKP-6** | Water-based | Noki fresh + Water based serami silicone | SK Kaken |

### Compositions used in material tests

Comparative examples are identified in Tables 5-7 by "(Ref.)".

**Table 5: Compositions used in material tests. Values are in wt.-% totaling 100%.**

| **Example compositions** | **E1** (Ref.) | **E2** (Ref.) | **E3** | **E4** | **E5** | **E6** (Ref.) |
|---|---|---|---|---|---|---|
| **P-1** | - | 15 | 15 | 15 | 15 | 15 |
| **P-2** | 24.30 | - | - | - | - | - |
| **MS polymer** | 5.00 | - | - | - | - | - |
| **Diol** | 13.00 | - | - | - | - | - |
| **CRP** | - | 18 | - | - | - | - |
| **RP-1** | - | - | 18 | - | - | - |
| **RP-2** | - | - | - | 18 | - | - |
| **RP-3** | - | - | - | - | 18 | - |
| **RP-4** | - | - | - | - | - | 18 |
| **Mineral oil** | 2.50 | 5 | 5 | 5 | 5 | 5 |
| **PCC** | 29.40 | 31.25 | 31.25 | 31.25 | 31.25 | 31.25 |
| **GCC** | 15.30 | 22.29 | 22.29 | 22.29 | 22.29 | 22.29 |
| **Thixotropic agent** | 1.69 | 1.69 | 1.69 | 1.69 | 1.69 | 1.69 |
| **HALS** | 0.28 | 0.28 | 0.28 | 0.28 | 0.28 | 0.28 |
| **UV-absorber** | 0.28 | 0.28 | 0.28 | 0.28 | 0.28 | 0.28 |
| **Antioxidant** | 0.28 | 0.28 | 0.28 | 0.28 | 0.28 | 0.28 |
| **Pigment** | 4.00 | 2.00 | 2.00 | 2.00 | 2.00 | 2.00 |
| **Drying agent** | 1.80 | 1.80 | 1.80 | 1.80 | 1.80 | 1.80 |
| **Adhesion promoter** | 041 | 0.41 | 0.41 | 0.41 | 0.41 | 0.41 |
| **Curing catalyst** | 0.085 | 0.085 | 0.085 | 0.085 | 0.085 | 0.085 |
| **Conventional plasticizer** | 1.63 | 1.63 | 1.63 | 1.63 | 1.63 | 1.63 |

### Material tests

**Table 6: Material tests. "n.m." means not measured.**

| **Test results** | | **E1** (Ref.) | **E2** (Ref.) | **E3** | **E4** | **E5** | **E6** (Ref.) |
|---|---|---|---|---|---|---|---|
| **Cut-off string** (mm) | | 56 | 25 | 27 | 22 | 26 | 38 |
| **Shore A** | 7d 23°C | 16 | 24 | 37 | 28 | 30 | 28 |
| | 28d 23°C | 17 | 22 | 37 | 29 | 34 | n.m. |
| **Tear propagation resistance** (N/mm) | 7d 23°C + 7d 50°C | 6.1 | 5.5 | 8.1 | 5.6 | 6.0 | 4.8 |
| **E-modulus 0.5-100%** (MPa) | 7d 23°C + 7d 50°C | 0.32 | 0.48 | 0.77 | 0.52 | 0.66 | 0.64 |
| **Elongation at break** (%) | 7d 23°C + 7d 50°C | 800 | 660 | 490 | 630 | 500 | 480 |
| **Tensile strength** (MPa) | 7d 23°C + 7d 50°C | 1.1 | 0.99 | 1.9 | 1.5 | 1.4 | 1.3 |

### Overpaintability tests

**Table 7: Overpaintability of the sealant was tested by investigating the dirt pick-up (DPU) and the delamination (DL) properties.**

| | **E1** (Ref.) | | **E2** (Ref.) | | **E3** | | **E4** | | **E5** | |
|---|---|---|---|---|---|---|---|---|---|---|
| | **DPU** | **DL** | **DPU** | **DL** | **DPU** | **DL** | **DPU** | **DL** | **DPU** | **DL** |
| **NP-1** | Bad | GT0 | Good | GT0 | Good | GT0 | Good | GT0 | Good | GT0 |
| **NP-2** | Bad | GT4 | Good | GT0 | Good | GT0 | Good | GT0 | Good | GT0 |
| **NP-3** | Bad | GT3 | Good | GT3 | Good | GT0 | Good | GT0 | Good | GT0 |
| **NP-6** | Bad | GT0 | Good | GT0 | Good | GT0 | Good | GT0 | Good | GT0 |
| **NP-7** | Bad | GT2 | Good | GT4 | Good | GT0 | Good | GT0 | Good | GT0 |
| **SKP-1** | Bad | GT0 | Good | GT0 | Good | GT0 | Good | GT0 | Good | GT0 |
| **SKP-2** | Slight | GT0 | Good | GT0 | Good | GT0 | Good | GT0 | Good | GT0 |
| **SKP-3** | Bad | GT0 | Good | GT0 | Good | GT0 | Good | GT0 | Good | GT0 |
| **SKP-4** | Bad | GT0 | Good | GT0 | Good | GT0 | Good | GT0 | Good | GT0 |
| **SKP-5** | Bad | GT0 | Good | GT0 | Good | GT0 | Good | GT0 | Good | GT0 |
| **SKP-6** | Bad | GT0 | Good | GT0 | Good | GT0 | Good | GT0 | Good | GT0 |
| **SKP-7** | Bad | GT0 | Good | GT0 | Good | GT0 | Good | GT0 | Good | GT0 |

## Claims

1. A one-component moisture curable composition comprising
a) at least one organic polymer **P** having 2 or more terminal hydrolyzable groups selected from dialkoxysilane or trialkoxysilane;
b) at least one reactive plasticizer **RP** having on average 1 to 1.5 terminal hydrolyzable groups selected from dialkoxysilane or trialkoxysilane
wherein the reactive plasticizer **RP** is a polymer product obtained by reacting successively;
i) a monohydroxy-functional poly(alkylene oxide) monool **MO** having an average molecular weight Mₙ of less than 3'000 g/mol with a diisocyanate **I** to form a urethane linkage and an isocyanate terminal group;
ii) endcapping the polymer of step i) with a secondary amine endcapper **EC** obtained from the reaction of a primary aminosilane **AS** with a Michael acceptor **M;**
c) optionally fillers **F,** preferably selected from chalk, especially from precipitated calcium carbonates and/or ground calcium carbonates;
d) optionally additives **A,** preferably selected from hindered amine light stabilizers, UV absorbers, antioxidants, pigments, drying agents, adhesion promoters, curing catalysts, plasticizers, mineral oils, and/or thixotropic agents.

2. The one-component composition according to preceding claim, wherein the backbone of the organic polymer **P** is a polyether, in particular a polyoxyethylene, polyoxypropylene or polyoxy-propylenepolyoxyethylene, a polyurethane, a poly(meth)acrylate, or a polybutadiene.

3. The one-component composition according to preceding claims, wherein the backbone of the reactive plasticizer **RP** is polyether, in particular a polyoxyethylene, polyoxypropylene or polyoxy-propylenepolyoxyethylene.

4. The one-component composition according to the preceding claims, **characterized in that** the polyether backbone of the reactive plasticizer **RP** has a molecular weight of between 300 and 2'500 g/mol, preferably between 500 and 2'000 g/mol and comprising polyoxyethylene and/or polyoxypropylene and/or polyoxy-propylenepolyoxyethylene moieties.

5. The one-component composition according to preceding claims, wherein the hydrolyzable groups of the organic polymer **P** and/or the reactive plasticizer **RP** are selected from trimethoxy silane, methyldimethoxy silane or triethoxy silane.

6. The one-component composition according to the preceding claims,
wherein the diisocyanate **I** is an aliphatic, cycloaliphatic or aromatic isocyanate, in particular MDI, TDI and IPDI, preferrably IPDI.

7. The one-component composition according to the preceding claims, wherein said aminosilane **AS** is according to formula (I) 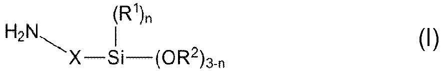
wherein radical R¹ represents a linear or branched monovalent hydrocarbon radical having 1 to 4 carbon atoms and which optionally contains one or more C-C multiple bonds, and/or cycloaliphatic, and/or aromatic moieties;
radical R² represents a linear or branched monovalent hydrocarbon radical having 1 to 5 carbon atoms and which optionally contains one or more C-C multiple bonds, and/or cycloaliphatic, and/or aromatic moieties;
X represents a linear or branched monovalent hydrocarbon radical having 1 to 6 carbon atoms and which optionally contains one or more heteroatoms and optionally one or more C-C multiple bonds, and/or cycloaliphatic, and/or aromatic moieties;
n is 1 or 0.

8. The one-component composition according to the preceding claims,
wherein said Michael acceptor **M** is according to formula (IIa) or (Ilb) 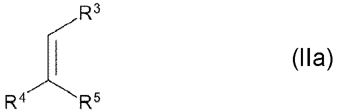 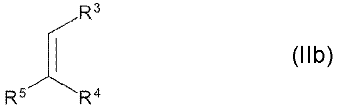
Wherein radical R³ represents a hydrogen radical or a radical selected from the group -COOR⁶, -CN or-NO₂;
radical R⁴ represents a hydrogen radical or a radical selected from the group -R⁶, -COOR⁶, -CN or -NO₂;
radical R⁵ represents a radical selected from the group -R⁶, -COOR⁶, - CN or -NO₂;
Radical R⁶ represents a linear or branched monovalent hydrocarbon radical having 1 to 20 carbon atoms.

9. The one-component composition according to the preceding claims,
wherein the endcapper **EC** is according to the formula (III) 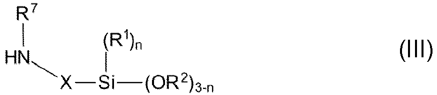
Wherein n and radicals X, R¹ and R² have the same meaning as described in claim 7;
radical R⁷ represents a linear or branched monovalent hydrocarbon radical having 1 to 20 carbon atoms and which optionally contains one or more heteroatoms and/or C-C-multiple bonds, and/or cycloaliphatic, and/or aromatic moieties.

10. The one-component moisture curable composition according to the preceding claims, **characterized in that** the weight ratio of polymer **P** to reactive plasticizer **RP** is 20:1 to 0.5:1, preferably 10:1 to 1:1, most preferably 5:1 to 1:1.

11. The one-component moisture curable composition according to the preceding claims, **characterized in that** the sealant contains less than 20 wt.-%, preferably less than 10 wt.-%, more preferably less than 5 wt.-% of non-reactive plasticizers, especially phthalate-containing compounds.

12. Use of a one-component composition according to the preceding claims as construction sealant, more particularly as exterior facing sealant, more preferably as construction sealant of class 25 LM according to ISO 11600, and/or as sealant according to ASTM C719 class 50.

13. A building or a part of a building built with said construction sealant according to claim 11, **characterized in that** the construction sealant was being painted over, preferably with water-based or solvent-based paint.

14. Use of a one-component composition according to claims 1 to 11 as industrial sealant or adhesive, in particular for wing-body truck assembly and/or automobile interior parts.

15. The one-component moisture curable composition according to claims 1 to 11, **characterized in that** said composition comprises
- 10 - 20 wt.-% of said polymer **P;**
- 15 - 25 wt.-% of said reactive plasticizer **RP;**
- preferably 0-10 wt.-% of mineral oil;
- preferably 20 - 40 wt.-% of precipitated calcium carbonate;
- preferably 15 - 25 wt.-% of ground calcium carbonate;
- preferably 0 - 6 wt.-% of hindered amine light stabilizers;
- preferably 0 - 6 wt.-% of UV absorber;
- preferably 0 - 6 wt.-% of adhesion promoter;
- preferably 0 - 8 wt.-% of thixotropic agent;
- preferably 0 - 6 wt.-% of antioxidant;
- preferably 0 - 6 wt.-% of curing catalyst, in particular tin catalyst;
- preferably 0-10 wt.-% of pigment;
- preferably 0 - 8 wt.-% of drying agent;
- preferably 0 - 20 wt.-% of non-reactive plasticizers.
